(19) **Europäisches Patentamt / European Patent Office / Office européen des brevets**

(11) **EP 3 521 318 A1**

(12) **EUROPEAN PATENT APPLICATION**
published in accordance with Art. 153(4) EPC

(43) Date of publication:
**07.08.2019 Bulletin 2019/32**

(21) Application number: **17856199.9**

(22) Date of filing: **27.09.2017**

(51) Int Cl.:
**C08B 11/12** (2006.01)     **H01M 4/62** (2006.01)

(86) International application number:
**PCT/JP2017/034906**

(87) International publication number:
**WO 2018/062250 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 30.09.2016  JP 2016192467
              30.09.2016  JP 2016192468
              30.09.2016  JP 2016192469

(71) Applicant: **Nippon Paper Industries Co., Ltd.**
**Tokyo 114-0002 (JP)**

(72) Inventors:
• **INOUE, Kazuhiko**
  **Tokyo 114-0002 (JP)**
• **CHIKASIGE, Syunpei**
  **Tokyo 114-0002 (JP)**
• **NISIGAYA, Kasumi**
  **Tokyo 114-0002 (JP)**
• **YABUUCHI, Masakazu**
  **Tokyo 114-0002 (JP)**

(74) Representative: **Müller-Boré & Partner**
**Patentanwälte PartG mbB**
**Friedenheimer Brücke 21**
**80639 München (DE)**

(54) **CARBOXYMETHYL CELLULOSE OR SALT THEREOF, AND ELECTRODE COMPOSITION**

(57)     An object is to increase the amount of adsorption of carboxymethylcellulose to an electrode active material. A carboxymethylcellulose or a salt thereof has a pH at 25°C of 4.0 or higher to lower than 6.8 in an aqueous solution having a solid content concentration of 1 mass%.

# EP 3 521 318 A1

**Description**

Field

The present invention relates to carboxymethylcellulose or a salt thereof, an aqueous solution thereof, an electrode composition for a nonaqueous electrolyte secondary battery, an electrode, and a secondary battery.

Background

Recently, electronic devices, particularly, portable devices such as mobile phones, personal digital assistants (PDAs), and notebook computers are becoming compact, lightweight, and thin with high performance, and the portable devices are ubiquitous. With the diversification of use of such portable devices, batteries for driving them are an extremely important component. Among batteries, nonaqueous electrolyte secondary batteries, typically, lithium ion secondary batteries, with a high energy density and a high capacity are widely used.

A nonaqueous electrolyte secondary battery is typically produced as follows. A negative electrode containing a negative electrode active material composed of a carbon material capable of absorbing and releasing lithium ions and a positive electrode containing a positive electrode active material composed of a lithium-containing transition metal composite oxide (for example, $LiCoO_2$, $LiNiO_2$, and $LiMn_2O_4$) are each formed in the form of a sheet on a surface of a metal foil serving as a collecting substrate (collector) to obtain a sheet-like positive electrode and a sheet-like negative electrode. The sheet-like positive electrode and the sheet-like negative electrode are wound or stacked with a sheet-like separator interposed and stored in a case. The sheet-like positive electrode and the sheet-like negative electrode each have a structure including a metal foil serving as a collecting substrate (collector) and a mixture layer including an active material formed on a surface of the electrode and can be formed by applying a negative electrode active material slurry (or paste) or a positive electrode active material slurry (or paste) on a collector material and drying the material.

The negative electrode active material slurry (paste) includes a binder in addition to the negative electrode active material composed of, for example, a carbon material capable of absorbing and releasing lithium ions. As an example of the binder, Patent Literature 1 (Japanese Patent Application Laid-open No. H5-74461) discloses a binder for a negative electrode including a styrene/butadiene latex (SBR) as a main component.

According to Patent Literature 1, carboxymethylcellulose is dissolved as a water-soluble thickener in water to prepare an aqueous solution, which is then mixed with SBR and a negative electrode active material to produce a slurry. The slurry is applied as a coating solution on a substrate and dried to form a sheet-like negative electrode.

On the other hand, in production of a positive electrode of a nonaqueous electrolyte secondary battery, an organic solvent such as N-methyl-2-pyrrolidone (NMP) has been used as a solvent. However, water has recently been used as a solvent for reducing costs required for handling and in consideration of environmental impact of disposal.

The positive electrode active material slurry (paste) includes a binder in addition to a lithium-containing transition metal composite oxide (for example, $LiCoO_2$, $LiNiO_2$, and $LiMn_2O_4$) serving as a positive electrode active material and carbon serving as a conductive material. As an example of the binder, Patent Literature 2 (Japanese Patent Application Laid-open No. 2003-157847) discloses cellulose, such as carboxymethylcellulose, in which a 1% aqueous solution thereof has a viscosity of 4,000 mPa·s or higher. Patent Literature 2 discloses that carboxymethylcellulose is put into pure water together with a conductive material, polytetrafluoroethylene (PTFE), and the like to prepare an active material paste.

Citation List

Patent Literature

Patent Literature 1: Japanese Patent Application Laid-open No. H5-74461
Patent Literature 1: Japanese Patent Application Laid-open No. 2003-157847

Summary

Technical Problem

As described above, carboxymethylcellulose is used as a thickener, a binder, and/or a dispersant in the electrode composition. Since carboxymethylcellulose per se does not have a property of an active material, there has been a desire to reduce the ratio of its content in the electrode composition.

However, if the carboxymethylcellulose content ratio in the electrode composition is reduced, the amount of adsorption of carboxymethylcellulose to the active material is reduced and, therefore, the expected thickening, binding, dispersing effect and the like are not achieved.

The present invention then aims to increase the amount of adsorption of carboxymethylcellulose to an electrode active material.

Solution to Problem

That is, the present invention provides the following.

[1] A carboxymethylcellulose or a salt thereof, wherein a pH at 25°C of an aqueous solution having a solid content concentration of 1 mass% is 4.0 or higher to lower than 6.8.

[2] The carboxymethylcellulose or the salt thereof according to [1], wherein a degree of substitution with carboxymethyl per anhydrous glucose unit is 0.45 or higher.

[3] The carboxymethylcellulose or the salt thereof according to [1] or [2], wherein a viscosity of an aqueous solution having a solid content concentration of 1 mass% measured by a Brookfield viscometer at 25°C is 1,000 mPa·s or higher to 20,000 mPa·s or lower.

[4] The carboxymethylcellulose or the salt thereof according to any one of [1] to [3], wherein an amount of acidic carboxy groups is 1.15 mmol/g or larger to 20.00 mmol/g or smaller.

[5] An aqueous carboxymethylcellulose solution comprising the carboxymethylcellulose or the salt thereof according to any one of [1] to [4] and water.

[6] The aqueous carboxymethylcellulose solution according to [5], wherein a pH at 25°C is 4.0 or higher to lower than 6.8.

[7] An electrode composition for a nonaqueous electrolyte secondary battery, comprising the carboxymethylcellulose or the salt thereof according to any one of [1] to [4], or the aqueous carboxymethylcellulose solution according to [5] or [6].

[8] The electrode composition for a nonaqueous electrolyte secondary battery according to [7], wherein a pH at 25°C is 4.0 or higher to lower than 6.8.

[9] The electrode composition for a nonaqueous electrolyte secondary battery according to [7] or [8], further comprising water and an electrode active material.

[10] The electrode composition for a nonaqueous electrolyte secondary battery according to [9], wherein the electrode active material is graphite.

[11] The electrode composition for a nonaqueous electrolyte secondary battery according to any one of [7] to [10], further comprising a synthetic rubber-based binder.

[12] An electrode for a nonaqueous electrolyte secondary battery, wherein the electrode is formed of the electrode composition for a nonaqueous electrolyte secondary battery according to any one of [7] to [11].

[13] A nonaqueous electrolyte secondary battery comprising the electrode according to [12].

[14] An aqueous carboxymethylcellulose solution for use in an electrode composition for a nonaqueous electrolyte secondary battery, wherein a pH at 25°C is 4.0 or higher to lower than 6.8.

[15] The aqueous carboxymethylcellulose solution according to [14], wherein
the aqueous carboxymethylcellulose solution comprises carboxymethylcellulose or a salt thereof with a degree of substitution with carboxymethyl per anhydrous glucose unit of 0.45 or higher, and a viscosity of a an aqueous solution having a solid content concentration of 1 mass% measured by a Brookfield viscometer at 25°C is 1,000 mPa·s or higher to 20,000 mPa·s or lower.

[16] An electrode composition for a nonaqueous electrolyte secondary battery, comprising the aqueous carboxymethylcellulose solution according to [14] or [15].

[17] An electrode for a nonaqueous electrolyte secondary battery, wherein the electrode is formed of the electrode composition for a nonaqueous electrolyte secondary battery according to [16].

[18] A nonaqueous electrolyte secondary battery comprising the electrode according to [17].

[19] An electrode composition for a nonaqueous electrolyte secondary battery comprising a carboxymethylcellulose or a salt thereof, an electrode active material, and water, wherein a pH at 25°C is 4.0 or higher to lower than 6.8.

[20] The electrode composition for a nonaqueous electrolyte secondary battery according to [19], wherein the carboxymethylcellulose or the salt thereof has a degree of substitution with carboxymethyl per anhydrous glucose unit of 0.45 or higher, and a viscosity of an aqueous solution of the carboxymethylcellulose or the salt thereof having a solid content concentration of 1 mass% measured by a Brookfield viscometer at 25°C is 1,000 mPa·s or higher to 20,000 mPa·s or lower.

[21] The electrode composition for a nonaqueous electrolyte secondary battery according to [19] or[20], wherein the electrode active material is graphite.

[22] The electrode composition for a nonaqueous electrolyte secondary battery according to any one of [19] to [21], further comprising a synthetic rubber-based binder.

[23] An electrode for a nonaqueous electrolyte secondary battery, wherein the electrode is formed of the electrode composition for a nonaqueous electrolyte secondary battery according to any one of [19] to [22].

[24] A nonaqueous electrolyte secondary battery comprising the electrode according to [23].

[25] A method of producing a carboxymethylcellulose or a salt thereof, the method comprising:

(i): dispersing a raw material including a carboxymethylcellulose or a salt thereof in a dispersion medium to obtain a dispersion liquid;

(ii): adjusting a pH at 25°C of the resultant dispersion liquid to 4.0 or higher to 6.8 or lower; and

(iii): separating a solid from the pH-adjusted dispersion liquid,

wherein an amount of acidic carboxy groups is 1.15 mmol/g or larger to 20.00 mmol/g or smaller.

The present invention provides the modes below.

[1-1] A carboxymethylcellulose or a salt thereof for use in an electrode composition for a nonaqueous electrolyte secondary battery,
in which the pH of an aqueous solution of the carboxymethylcellulose or the salt thereof having a solid content concentration of 1 mass% (25°C) is in a range of 4.0 or higher to lower than 6.8.

[1-2] The carboxymethylcellulose or the salt thereof according to [1-1], in which the carboxymethylcellulose or the salt thereof has a degree of substitution with carboxymethyl per anhydrous glucose unit of 0.45 or higher, and the viscosity of an aqueous solution of the carboxymethylcellulose or the salt thereof having a solid content concentration of 1 mass% measured by a Brookfield viscometer at 25°C is 1,000 mPa·s to 20,000 mPa·s.

[1-3] An electrode composition for a nonaqueous electrolyte secondary battery, in which the electrode composition includes the carboxymethylcellulose or the salt thereof according to [1-1] and [1-2].

[1-4] An electrode for a nonaqueous electrolyte secondary battery, in which the electrode is formed of the electrode composition for a nonaqueous electrolyte secondary battery according to [1-3].

[1-5] A nonaqueous electrolyte secondary battery including the electrode according to [1-4].

[2-1] An aqueous carboxymethylcellulose solution for use in an electrode composition for a nonaqueous electrolyte secondary battery, in which the aqueous carboxymethylcellulose solution has a pH of 4.0 or higher to lower than 6.8.

[2-2] The aqueous carboxymethylcellulose solution according to [2-1], in which the aqueous carboxymethylcellulose solution includes carboxymethylcellulose having a degree of substitution with carboxymethyl per anhydrous glucose unit of 0.45 or higher, and the viscosity of an aqueous solution having a solid content concentration of 1 mass% measured by a Brookfield viscometer at 25°C is 1,000 mPa·s to 20,000 mPa·s.

[2-3] An electrode composition for a nonaqueous electrolyte secondary battery, in which the electrode composition includes the aqueous carboxymethylcellulose solution according to [2-1] or [2-2].

[2-4] An electrode for a nonaqueous electrolyte secondary battery, in which the electrode is formed of the electrode composition for a nonaqueous electrolyte secondary battery according to [2-3].

[2-5] A nonaqueous electrolyte secondary battery including the electrode according to [2-4].

[3-1] An electrode composition for a nonaqueous electrolyte secondary battery, the electrode composition at least containing a carboxymethylcellulose or a salt thereof, an electrode active material, and water,
in which the electrode composition for a nonaqueous electrolyte secondary battery has a pH at 25°C in a range of 4.0 or higher to lower than 6.8.

[3-2] The electrode composition for a nonaqueous electrolyte secondary battery according to [3-1], in which the carboxymethylcellulose or the salt thereof has a degree of substitution with carboxymethyl per anhydrous glucose unit of 0.45 or higher and the viscosity of an aqueous solution of the carboxymethylcellulose or the salt thereof having a solid content concentration of 1 mass% measured by a Brookfield viscometer at 25°C is 1,000 mPa·s to 20,000 mPa·s.

[3-3] The electrode composition for a nonaqueous electrolyte secondary battery according to [3-1] or [3-2], in which the electrode active material is graphite.

[3-4] The electrode composition for a nonaqueous electrolyte secondary battery according to any one of [3-1] to [3-3], in which the electrode composition for a nonaqueous electrolyte secondary battery further includes a styrene-butadiene latex.

[3-5] An electrode for a nonaqueous electrolyte secondary battery, in which the electrode is formed by applying the electrode composition for a nonaqueous electrolyte secondary battery according to any one of [3-1] to [3-4].

[3-6] A nonaqueous electrolyte secondary battery including the electrode according to [3-5]. Advantageous Effects of Invention

The present invention can increase the amount of adsorption of carboxymethylcellulose to an electrode active material.

Description of Embodiments

Although the present invention will be described in detail below in conjunction with embodiments, the present invention is not limited thereto.

In the present description, the notation "AA to BB%" means "AA% or higher to BB% or lower" unless otherwise specified.

In the present description, an acidic carboxy group means a group represented by -COOH. The acidic carboxy group does not include a carboxylate group (group represented by -COO⁻).

In the present description, a salt of carboxymethylcellulose includes a partial salt in which part of a plurality of carboxy groups included in a carboxymethylcellulose molecule are salt or a perfect salt in which all the carboxy groups are salt.

In the present description, the hydrogen ion exponent (pH) is a measured value at 25°C, unless otherwise specified.

[Carboxymethylcellulose (CMC) or Salt Thereof]

The carboxymethylcellulose or the salt thereof in the present embodiment usually has a pH of 4.0 or higher to lower than 6.8 at 25°C in an aqueous solution having a solid content concentration of 1 mass%.

In the present description, carboxymethylcellulose or a salt thereof means a compound having a structure in which hydroxy groups in glucose residues constituting cellulose are substituted with carboxymethyl ether groups. The carboxymethylcellulose may be in the form of a salt. Examples of the salt of carboxymethylcellulose may include metal salts such as sodium carboxymethylcellulose salt.

In the present description, cellulose means a polysaccharide having a structure including β,1-4-linked D-glucopyranose (also simply referred to as "glucose residues" or "anhydrous glucose"). Cellulose is usually classified, for example, by its origin, production method, and the like into natural cellulose, regenerated cellulose, fine cellulose, and microcrystalline cellulose obtained by removing amorphous regions.

Examples of the natural cellulose include bleached pulp and unbleached pulp (bleached wood pulp and unbleached wood pulp); linter and purified linter; and cellulose produced by microorganisms such as acetobacter. Examples of raw materials for the bleached pulp and unbleached pulp include, but not limited to, wood, cotton, straw, and bamboo. The bleached pulp and unbleached pulp may be produced by any method, for example, by a mechanical method, a chemical method, or an intermediate method of mechanical and chemical methods in combination. Examples of the bleached pulp and unbleached pulp classified by manufacturing methods include mechanical pulp, chemical pulp, ground pulp, sulfite pulp, and kraft pulp. Paper pulp as well as dissolving pulp may be used. The dissolving pulp is chemically refined pulp, mainly used in the form of a solution in a chemical, and serves as a main raw material for artificial fiber, cellophane, and the like.

Examples of the regenerated cellulose include those obtained by dissolving cellulose in a solvent such as a cuprammonium solution, a cellulose xanthate solution, or a morpholine derivative and then re-spinning the resultant cellulose.

Examples of the fine cellulose include cellulose obtained by subjecting a cellulose-based material, such as the above natural cellulose or regenerated cellulose, to depolymerization (such as acid hydrolysis, alkaline hydrolysis, enzymatic decomposition, explosion, or vibratory ball milling); and cellulose obtained by mechanically processing the above cellulose-based material.

In production of the carboxymethylcellulose used in the present embodiment, a known production method of carboxymethylcellulose can be used. For example, the carboxymethylcellulose can be produced by treating cellulose with a mercerizing agent (alkali) to prepare mercerized cellulose (alkali cellulose) and then adding an etherifying agent to initiate an etherification reaction.

Although any of the celluloses above can be used as a raw material cellulose, it is preferable to use cellulose with high purity, and dissolving pulp and linter are particularly preferred. By using them, carboxymethylcellulose or a salt thereof with high purity can be obtained.

An alkali metal hydroxide such as sodium hydroxide and potassium hydroxide may be used as the mercerizing agent. Monochloroacetic acid, sodium monochloroacetate, and the like may be used as the etherifying agent.

In a method of manufacturing water-soluble common carboxymethylcellulose, the molar ratio of the mercerizing agent to the etherifying agent (mercerizing agent/etherifying agent) is usually 2.00 to 2.45 when monochloroacetic acid is used as the etherifying agent. The reasons are as follows. If the molar ratio is lower than 2.00, there is a risk that the etherification reaction may not proceed sufficiently, so that unreacted monochloroacetic acid may be left and wasted.

The ratio higher than 2.45 is uneconomical because if so, a side reaction between the excess mercerizing agent and the monochloroacetic acid may proceed to generate alkali metal glycolate.

The carboxymethylcellulose obtained by the method above usually has a pH in the neutral range (pH 6.8 to 7.2) in an aqueous solution having a solid content concentration of 1 mass% (25°C).

The carboxymethylcellulose or the salt thereof in the present embodiment has a pH at 25°C of usually 4.0 or higher to lower than 6.8, preferably 5.0 or higher, more preferably 5.5 or higher, preferably 6.5 or lower, more preferably a pH of 5.0 to 6.5, and further preferably a pH of 5.5 to 6.5, in an aqueous solution having a solid content concentration of 1 mass%.

Carboxymethylcellulose or a salt thereof having a pH in the neutral range (pH 6.8 to 7.2) in an aqueous solution having a solid content concentration of 1 mass% is converted into the carboxymethylcellulose or the salt thereof in the present embodiment having a pH in the acidic range (pH 4.0 or higher to lower than 6.8) in an aqueous solution having a solid content concentration of 1 mass%, for example, by a method including the steps (i) to (iii) below in this order, more specifically, for example, by immersing carboxymethylcellulose or a salt thereof in methanol, then adjusting the pH by adding an acid such as acetic acid, and drying to obtain an acidic CMC.

When the carboxymethylcellulose or the salt thereof in the present embodiment is used for an electrode composition for a nonaqueous electrolyte secondary battery, an advantageous effect of increasing the amount of adsorption of carboxymethylcellulose or a salt thereof to an electrode active material can be achieved. The reason is presumed to be as follows.

In the step of adjusting the pH of the carboxymethylcellulose or the salt thereof to the acidic range, it is presumed that increase of hydroxy groups enhances the hydrogen bonding action between carboxymethylcellulose and other carboxymethylcellulose to cause pseudo polymerization, or ester bonds are formed between carboxymethylcellulose and other carboxymethylcellulose to cause polymerization. As a result, the (pseudo) points, at which an active material can adsorb, per one molecule of carboxymethylcellulose increase and thus the amount of adsorption to the active material increases. Therefore, the carboxymethylcellulose or the salt thereof in the present embodiment efficiently provides the thickening, binding, and/or dispersing effect, even with a small amount of addition, leading to reduction of the amount of added carboxymethylcellulose, which may be an inhibitor in a battery reaction. Thus, improvement of the battery characteristics can be expected.

Preferably, the carboxymethylcellulose or the salt thereof is water-soluble. More specifically, the carboxymethylcellulose or the salt thereof has a degree of substitution with carboxymethyl per anhydrous glucose unit of preferably 0.45 or higher, and more preferably 0.6 or higher. If the degree of substitution with carboxymethyl is lower than 0.45, there is a risk that the carboxymethylcellulose or the salt thereof may not sufficiently dissolve in water. In the present description, the anhydrous glucose unit means each individual anhydrous glucose (glucose residue) that constitutes the cellulose. The degree of substitution with carboxymethyl (also referred to as the degree of etherification) refers to the ratio of hydroxy groups (-OH) in the glucose residues constituting the cellulose that have been substituted with carboxymethyl ether groups (-OCH$_2$COOH). The degree of substitution with carboxymethyl may be abbreviated as DS.

In the carboxymethylcellulose or the salt thereof, the upper limit of the degree of substitution with carboxymethyl per anhydrous glucose unit is preferably, but not limited to, 2.0 or lower, more preferably 1.5 or lower, and most preferably 1.0 or lower.

The degree of substitution with carboxymethyl can be determined by measuring the amount of a base such as sodium hydroxide required to neutralize carboxymethylcellulose in a sample. In this case, if the carboxymethyl ether group in the carboxymethylcellulose or the salt thereof is in the form of salt, it is converted into carboxymethylcellulose before measurement. In measurement, back titration using a base or an acid and an indicator such as phenolphthalein may be used in combination.

In the present embodiment, a 1 mass% aqueous solution of the carboxymethylcellulose or the salt thereof has a viscosity of preferably 1,000 mPa·s to 20,000 mPa·s as measured at 25°C by a Brookfield viscometer, more preferably 1,500 mPa·s to 15,000 mPa·s, and further preferably 2,000 mPa·s to 10,000 mPa·s.

In the carboxymethylcellulose or the salt thereof in the present embodiment, the amount of acidic carboxy groups is preferably 1.15 mmol/g or larger, more preferably 1.20 mmol/g or larger, preferably 20.00 mmol/g or smaller, more preferably 15.00 mmol/g or smaller, further preferably 3.00 mmol/g or smaller, and preferably 1.15 mmol/g or larger to 20.00 mmol/g or smaller.

When the amount of acidic carboxy groups of the carboxymethylcellulose or the salt thereof in the present embodiment is within the preferable range above, the amount of adsorption of carboxymethylcellulose or a salt thereof to the electrode active material can be increased.

Here, the amount of acidic carboxy groups of carboxymethylcellulose or a salt thereof can be determined using Equation (A), in which x (g) of carboxymethylcellulose or a salt thereof is in the form of an aqueous solution, while the electrical conductivity of the aqueous solution is measured, an aqueous sodium hydroxide solution of a predetermined concentration y (N) is added dropwise, and a (mL) is the amount of aqueous sodium hydroxide solution consumed in weak acidity in which the change of electrical conductivity is mild, that is, the neutralization process of the acidic carboxy

groups.

$$\text{The amount of acidic carboxy groups [mmol/g]} = a \text{ [mL]} \times y \text{ [N]/the mass } x \text{ [g] of carboxymethylcellulose or a salt thereof} \cdots \text{(A)}$$

Specifically, the amount of acidic carboxy groups of carboxymethylcellulose or a salt thereof can be measured by the method below.

An aqueous solution is prepared by adding 100 mL of ion-exchange water to 0.1 g of carboxymethylcellulose or a salt thereof, and to this aqueous solution, an aqueous sodium hydroxide solution with a concentration of 0.1 N is added dropwise at a rate of 0.5 mL/min while the electrical conductivity is measured.

Subsequently, a titration curve is created by plotting the electrical conductivity against the amount of the added aqueous sodium hydroxide solution.

Subsequently, in the titration curve, a first asymptote is created by the least squares method from the points in a range in which the change of electrical conductivity is mild, and a second asymptote is created by the least squares method from the points in a range in which the change of electrical conductivity is steep. The amount of the added aqueous sodium hydroxide solution at the intersection of the first asymptote and the second asymptote is considered to be the amount a (mL) of an aqueous sodium hydroxide solution consumed in the neutralization process of acidic carboxy groups.

The amount of acidic carboxy groups is calculated by Equation (A) from the mass (g) of carboxymethylcellulose or a salt thereof, the concentration (N) of sodium hydroxide, and the amount a (mL) of an aqueous sodium hydroxide solution, used in titration.

As electrical conductivity, the numerical value obtained from a conductometer may be directly used. Alternatively, the electrical conductivity obtained from a conductometer may be corrected by multiplying the numerical value obtained from a conductometer by a coefficient calculated from Equation (B) below, and the corrected electrical conductivity may be used to obtain a first asymptote and a second asymptote.

$$\text{(Coefficient)} = (V_0 \text{ (mL)} + v \text{ (mL)})/V_0 \text{ (mL)} \ldots \text{(B)}$$

In the equation above, $V_0$ is the amount of an aqueous solution of carboxymethylcellulose or a salt thereof before an aqueous sodium hydroxide solution is added, and v is the amount of the added aqueous sodium hydroxide solution at each value of electrical conductivity.

A raw material including carboxymethylcellulose or a salt thereof is converted into the carboxymethylcellulose or the salt thereof in the present embodiment with the amount of acidic carboxy groups of 1.15 mmol/g or larger to 20.00 mmol/g or smaller, for example, by the method below including step (i) to step (iii) below:

(i): the step of dispersing a raw material including carboxymethylcellulose or a salt thereof in a dispersion medium to produce a dispersion liquid;
(ii): the step of adjusting the pH at 25°C of the resultant dispersion liquid to 4.0 or higher to 6.8 or lower; and
(iii): the step of separating a solid from the pH-adjusted dispersion liquid.

In step (i), examples of the dispersion medium for dispersing a raw material including carboxymethylcellulose or a salt thereof include alcohols such as methanol, water, and a mixture liquid thereof. Methanol or a mixture liquid of methanol and water is preferred.

In step (ii), the pH at 25°C of the resultant dispersion liquid is adjusted, for example, by adding an acid such as acetic acid to the dispersion liquid.

In step (iii), a solid is separated from the pH-adjusted dispersion liquid, for example, by filtration.

After the solid is separated in step (iii), the resultant solid may be dried.

As a raw material of the carboxymethylcellulose or the salt thereof in the present embodiment, a commercially available material may be used without treatment or may be treated before use, if necessary. An example of the commercially available product is the trade name "SUNROSE" (sodium salt of carboxymethylcellulose) manufactured by NIPPON PAPER INDUSTRIES CO., LTD.

[Pulverization Process]

The carboxymethylcellulose or the salt thereof as described above may be used without treatment as the carboxymethylcellulose or the salt thereof. However, it may be subjected to a pulverization process (pulverized product). The pulverization process is usually a mechanical pulverization process performed using a machine. Examples of method of the pulverization process of carboxymethylcellulose or a salt thereof include dry pulverization performed in a powder state and wet pulverization performed in a dispersed or dissolved state in a liquid. One of these methods is preferable.

Examples of the pulverizer that can be used for the mechanical pulverization process include dry pulverizers and wet pulverizers described below.

Examples of the dry pulverizers include a cutting mill, an impact mill, a jet mill, and a media mill. A jet mill is preferred. These may be used alone or in combination, or dry pulverizers of the same type or of different types may be used in multi-steps.

Examples of the cutting mill include a mesh mill (manufactured by HORAI Co., Ltd.), ATOMS (manufactured by K. K. Yamamoto Hyakuma Seisakusho), a knife mill (manufactured by PALLMANN Industries, Inc.), a granulator (manufactured by HERBOLD), and a rotary cutter mill (manufactured by NARA MACHINERY Co., Ltd.).

Examples of the impact mill include a pulverizer (manufactured by Hosokawa Micron Corporation), a fine impact mill (manufactured by Hosokawa Micron Corporation), a super micron mill (manufactured by Hosokawa Micron Corporation), a sample mill (manufactured by Seishin Enterprise Co., Ltd.), a bantam mill (manufactured by Seishin Enterprise Co., Ltd.), an atomizer ((manufactured by Seishin Enterprise Co., Ltd.), a tornado mill (NIKKISO Co., Ltd.), a turbo mill (manufactured by TURBO KOGYO CO., LTD.), and a bevel impactor (manufactured by AIKAWA Iron Works Co., Ltd.).

Examples of the jet mill include a CGS-type jet mill (manufactured by Mitsui Mining Co., Ltd.), a jet mill (manufactured by Sansho Industry Co., Ltd.), EBARA jet micronizer (manufactured by EBARA CORPORATION), Ceren Miller (manufactured by MASUKO SANGYO Co., Ltd.), and a supersonic jet mill (manufactured by Nippon Pneumatic Mfg. Co., Ltd.).

Examples of the media mill include a vibratory ball mill.

Examples of the wet pulverizer include Mass Collider (manufactured by MASUKO SANGYO Co., Ltd.), a highpressure homogenizer (manufactured by SANMARU MACHINERY Co., Ltd.), and a media mill. Examples of the media mill include a bead mill (manufactured by AIMEX Co., Ltd.).

[Particle Size of Carboxymethylcellulose]

In the present embodiment, the particle size of carboxymethylcellulose or a salt thereof is preferably smaller. More specifically, the value of the volume cumulative 100% particle size (in the present description, hereinafter may be referred to as "maximum particle size") measured by a laser diffraction-scattering particle size distribution meter using methanol as a dispersant is preferably smaller than 50 $\mu$m, more preferably smaller than 45 $\mu$m. When the maximum particle size of carboxymethylcellulose or a salt thereof is 50 $\mu$m or larger, an unsolved product in the aqueous solution of carboxymethylcellulose or a salt thereof tends to increase.

In the present embodiment, carboxymethylcellulose or a salt thereof may be subjected to a granulation process. This process makes the handling easy. When subjected to a granulation process, carboxymethylcellulose or a salt thereof may have the maximum particle size of 50 $\mu$m or larger. However, the maximum particle size of carboxymethylcellulose or a salt thereof before a granulation process is preferably smaller than 50 $\mu$m.

The lower limit of the maximum particle size is not limited. The smaller size is more preferable as long as the maximum particle size exceeds zero.

The volume cumulative 50% particle size (hereinafter referred to as average particle size) of carboxymethylcellulose or a salt thereof measured by a laser diffraction-scattering particle size distribution meter using methanol as a dispersion medium is usually 30 $\mu$m or smaller, preferably 20 $\mu$m or smaller, and more usually 15 $\mu$m or smaller. The lower limit of the average particle size is usually, but not limited to, 5 $\mu$m or larger, preferably 10 $\mu$m or larger, and more preferably 12 $\mu$m or larger.

In the present embodiment, carboxymethylcellulose or a salt thereof may be classified based on the particle size (preferably, the maximum particle size). The classification means a process of sieving and separating target particles into particles equal to or larger than a certain particle size and particles equal to or smaller than a certain particle size.

Preferably, the classification is performed based on the case that the maximum particle size is smaller than 50 $\mu$m or the case that the maximum particle size is 50 $\mu$m or larger. Thus, carboxymethylcellulose or a salt thereof with the maximum particle size of smaller than 50 $\mu$m can be selectively collected.

When the pulverized product of carboxymethylcellulose or a salt thereof is used as the carboxymethylcellulose or the salt thereof, the above classification may be performed at any timing, may be performed during the pulverization process, or may be performed after the end of the pulverization process.

The classification may be performed by any known methods, for example, using a dry classifier or a wet classifier.

Examples of the dry classifier include a cyclone classifier, a DS separator, a turbo classifier, a micro separator, and an air separator. Examples of the wet classifier include a liquid cyclone classifier, a centrifugal settler, and a hydro-oscillator. A dry classifier is preferred, and a cyclone classifier is more preferred.

[Aqueous Solution of Carboxymethylcellulose or Salt Thereof]

An aqueous solution of carboxymethylcellulose or a salt thereof according to an embodiment is an aqueous solution including carboxymethylcellulose or a salt thereof with a pH at 25°C of 4.0 or higher to lower than 6.8 in an aqueous solution having a solid content concentration of 1 mass% and may be used, for example, for an electrode composition for forming an electrode of a nonaqueous electrolyte secondary battery. Examples and preferred examples of the carboxymethylcellulose or the salt thereof are the same as described in the section [Carboxymethylcellulose or Salt Thereof] above.

An aqueous solution of carboxymethylcellulose or a salt thereof according to another embodiment has a pH at 25°C of 4.0 or higher to lower than 6.8 and may be used, for example, for an electrode composition for forming an electrode of a nonaqueous electrolyte secondary battery. Examples and preferred examples of the carboxymethylcellulose or the salt thereof are the same as the examples described in the section [Carboxymethylcellulose or Salt Thereof] above.

The concentration of carboxymethylcellulose or a salt thereof in an aqueous solution of carboxymethylcellulose or a salt thereof (hereinafter may be simply referred to as aqueous carboxymethylcellulose solution) is usually 0.1 mass% to 10 mass%, preferably 0.2 mass% to 4 mass%, and more preferably 0.5 mass% to 2 mass%.

The aqueous solution of carboxymethylcellulose or a salt thereof may be produced in any conditions. The aqueous solution is prepared, for example, by adding carboxymethylcellulose or a salt thereof to water (for example, distilled water, purified water, tap water) and stirring the mixture, if necessary, to dissolve.

The aqueous solution of carboxymethylcellulose or a salt thereof has a pH at 25°C of preferably 4.0 or higher, more preferably 5.0 or higher, further preferably 5.5 or higher, preferably lower than 6.8, more preferably 6.5 or lower, further preferably 6.0 or lower, preferably 4.0 or higher to lower than 6.8, more preferably 5.0 or larger to 6.5 or lower, and further preferably 5.5 or higher to 6.0 or lower.

An aqueous carboxymethylcellulose solution with a pH at 25°C in the neutral range (pH 6.8 to 7.2) is converted into an aqueous carboxymethylcellulose solution with a pH at 25°C in the above preferred range, for example, by adjusting the pH by adding an acid such as acetic acid and hydrochloric acid to an aqueous carboxymethylcellulose solution with a pH at 25°C in the neutral range to obtain an acidic aqueous solution including carboxymethylcellulose or a salt thereof.

When the aqueous solution of carboxymethylcellulose or a salt thereof in these embodiments is used for an electrode composition for a nonaqueous electrolyte secondary battery, an advantageous effect of increasing the amount of adsorption of carboxymethylcellulose or a salt thereof to the electrode active material can be achieved. The reason is presumed to be as follows. With the pH of the aqueous solution of carboxymethylcellulose or a salt thereof within a predetermined acidic range, the increase of hydroxy groups enhances the hydrogen bonding action between carboxymethylcellulose and other carboxymethylcellulose to cause pseudo polymerization of carboxymethylcellulose, or ester bonds are formed between carboxymethylcellulose and other carboxymethylcellulose to cause polymerization of carboxymethylcellulose, whereby the (pseudo) points, at which the active material can adsorb, per one molecule of carboxymethylcellulose increase. The amount of adsorption to the active material thus increases.

Accordingly, even when the amount of the aqueous carboxymethylcellulose solution in the embodiments contained in an electrode composition is small, the thickening, binding, and/or dispersing effect is efficiently achieved, leading to reduction of the amount of added carboxymethylcellulose, which may be an inhibitor during a battery reaction. Thus, improvement of the battery characteristics can be expected.

[Electrode Composition for Nonaqueous Electrolyte Secondary Battery]

The carboxymethylcellulose or the salt thereof in the present embodiment has preferable characteristics as a binder for an electrode of a nonaqueous electrolyte secondary battery. An electrode composition for a nonaqueous electrolyte secondary battery according to an embodiment (hereinafter "electrode composition for a nonaqueous electrolyte secondary battery" may also be referred to as "electrode composition") includes carboxymethylcellulose or a salt thereof with a pH at 25°C of 4.0 or higher to lower than 6.8 in an aqueous solution having a solid content concentration of 1 mass% and may be used for forming an electrode of a nonaqueous electrolyte secondary battery. An aqueous solution including carboxymethylcellulose or a salt thereof is usually used as a binder for an electrode of a nonaqueous electrolyte secondary battery.

In another embodiment, the electrode composition for a nonaqueous electrolyte secondary battery includes an aqueous solution of carboxymethylcellulose or a salt thereof with a pH at 25°C of 4.0 or higher to lower than 6.8 and may be used for forming an electrode of a nonaqueous electrolyte secondary battery.

In yet another embodiment, the electrode composition for a nonaqueous electrolyte secondary battery includes carboxymethylcellulose or a salt thereof, an electrode active material, and water, has a pH at 25°C of 4.0 or higher to lower than 6.8, and may be used for forming an electrode of a nonaqueous electrolyte secondary battery.

The carboxymethylcellulose or the salt thereof or an aqueous solution of the carboxymethylcellulose or the salt thereof may be usually included as a binder for an electrode in an electrode composition for a nonaqueous electrolyte secondary battery (hereinafter abbreviated as electrode composition) together with an electrode active material. The electrode composition may be in any form, for example, in the form of a slurry or paste.

The amount of carboxymethylcellulose or a salt thereof contained in the electrode composition is preferably 0.1 mass% to 4.0 mass% with respect to the entire electrode composition.

The pH at 25°C of the electrode composition is preferably 4.0 or higher, more preferably 5.0 or higher, further preferably 5.5 or higher, and preferably lower than 6.8, more preferably 6.5 or lower, preferably 4.0 or higher to lower than 6.8, more preferably 5.0 or higher to 6.5 or lower, and further preferably 5.5 or higher to 6.5 or lower.

Methods to set the pH at 25°C of the electrode composition to the preferable range above include adding an acid such as acetic acid to an electrode composition including carboxymethylcellulose or a salt thereof, an electrode active material, and water to adjust the pH.

In the electrode composition in the embodiments, the advantageous effect of increasing the adsorption amount of the included carboxymethylcellulose or the salt thereof to the electrode active material is achieved. The reason is presumed to be as follows. With the pH of the electrode composition within a predetermined acidic range, the increase of hydroxy groups enhances the hydrogen bonding action between carboxymethylcellulose and other carboxymethylcellulose to cause pseudo polymerization of carboxymethylcellulose, or ester bonds are formed between carboxymethylcellulose and other carboxymethylcellulose to cause polymerization of carboxymethylcellulose, whereby the (pseudo) points, at which the active material can adsorb, per one molecule of carboxymethylcellulose increase. The amount of adsorption to the active material thus increases.

Accordingly, in the electrode composition in embodiments, the included carboxymethylcellulose or the salt thereof efficiently provides at least thickening, binding, and/or dispersing effect, and the amount of added carboxymethylcellulose, which may be an inhibitor during a battery reaction, can be reduced. Thus, improvement of battery characteristics can be expected.

The electrode composition may include a variety of components depending on whether the electrode formed with the composition is a negative electrode or a positive electrode.

An electrode composition for a negative electrode usually contains a negative electrode active material. Examples of the negative electrode active material include graphite materials such as graphite (natural graphite and artificial graphite), coke, and carbon fibers; elements that can be alloyed with lithium, specifically, elements such as Al, Si, Sn, Ag, Bi, Mg, Zn, In, Ge, Pb, and Ti; compounds containing the above elements that can be alloyed with lithium; composite materials of the elements that can be alloyed with lithium and the above compounds, and carbon and/or the above graphite materials; and nitrides containing lithium. Among them, graphite materials are preferred, and graphite is more preferred.

An electrode composition for a positive electrode usually contains a positive electrode active material. Preferably, the positive electrode active material is a $LiMe_xO_y$-based positive electrode active material (where Me is a transition metal including at least one of Ni, Co, and Mn, and x and y are any numbers). Preferred examples of the $LiMe_xO_y$-based positive electrode active material include, but not limited to, $LiMn_2O_4$-based, $LiCoO_2$-based, and $LiNiO_2$-based positive electrode active materials. Examples of the $LiMn_2O_4$-based, $LiCoO_2$-based, and $LiNiO_2$-based positive electrode active materials include compounds having main skeletons of $LiMnO_2$, $LiMn_2O_4$, $LiCoO_2$, or $LiNiO_2$ with metal elements substituted. The $LiMn_2O_4$-based, $LiCoO_2$-based, and $LiNiO_2$-based positive electrode active materials can provide lithium ion secondary batteries having high charge-discharge efficiency and good cycle characteristics because they have excellent performance as positive electrode active materials, for example, excellent performance in diffusion of electrons and lithium ions. Among them, the $LiCoO_2$-based positive electrode active material is preferred, and $LiCoO_2$ is more preferred. The $LiMn_2O_4$-based positive electrode active material is also preferably used because of its low material cost.

The amount of active material contained in the electron composition is usually 90 mass% to 99 mass%, preferably 91 mass% to 99 mass%, and more preferably 92 mass% to 99 mass%.

The electrode composition for a positive electrode preferably includes a conductive material. When the electrode composition (which may be in the form of a slurry) includes a conductive material, the characteristics of the produced positive electrode are improved. The conductive material can ensure the electrical conductivity of a positive electrode. Examples of the conductive material include a mixture of one or more of carbon materials such as carbon black, acetylene black, and graphite. Among those, carbon black is preferred.

The electrode composition may contain a binder other than an aqueous solution of carboxymethylcellulose or a salt thereof. Examples of the binder for the electrode composition for a negative electrode include synthetic rubber-based binders. One or more selected from the group consisting of styrene-butadiene rubber (SBR), nitrile-butadiene rubber, methyl methacrylate-butadiene rubber, chloroprene rubber, carboxy modified styrene-butadiene rubber, and latexes of these synthetic rubbers can be used as the synthetic rubber-based binder. Among them, a latex of styrene-butadiene rubber (SBR) is preferred. Examples of the binder for the electrode composition for a positive electrode include the synthetic rubber-based binders listed above as the binder for a negative electrode, as well as polytetrafluoroethylene (PTFE). Among them, polytetrafluoroethylene (PTFE) is preferred.

The amount of the binder contained in the electrode composition is usually 1 mass% to 10 mass%, preferably 1 mass% to 6 mass%, and more preferably 1 mass% to 2 mass% with respect to the entire solid content.

The electrode composition can be produced in any conditions. For example, another component that constitutes the electrode composition is added to an aqueous solution of carboxymethylcellulose or a salt thereof and mixed while being stirred, if necessary.

The electrode composition may be in any form. Examples of the form include liquid, paste, and a slurry, and either of them may be employed.

[Electrode for Nonaqueous Electrolyte Secondary Battery]

The electrode composition is used for producing an electrode for a nonaqueous electrolyte secondary battery. An electrode for a nonaqueous electrolyte secondary battery may be produced, for example, by depositing the electrode composition on a collecting substrate (collector). More specifically, examples of the method include a process of applying the electrode composition on a collector to obtain a coating layer. Examples of the stacking method include blade coating, bar coating, and die coating, and blade coating is preferred. Examples of the blade coating include casting an electrode composition on a collecting substrate using a coating device such as a doctor blade. The stacking method is not limited to the above specific examples. In another example of the stacking method, the electrode composition is discharged and applied by an extrusion-type injector with a slot nozzle onto a running collecting substrate wound around on a backup roll. In blade coating, if necessary, casting may be followed by drying by heating (at a heating temperature of, for example, 80°C to 120°C for a heating time of, for example, 4 hours to 12 hours) and applying pressure with a roller press.

As the collecting substrate, any conductor that does not produce an extreme chemical change in the constructed battery can be used.

As a collecting substrate for a negative electrode active material, for example, stainless steel, nickel, copper, titanium, carbon, copper or stainless steel with carbon, nickel, titanium, or silver adhering to the surface thereof can be used. Among them, copper or copper alloy is preferred. Copper is the most preferable.

Examples of the material of a collecting substrate for a positive electrode include metals such as aluminum and stainless steel. Aluminum is preferred. Examples of the shape of the collecting substrate include mesh, punched metal, form metal, and foil processed into a plate shape. A foil processed into a plate shape is preferable as a collecting substrate.

The electrode for a nonaqueous electrolyte secondary battery formed of the electrode composition may have any shape and is usually shaped like a sheet. The thickness of a sheet-like electrode plate (the thickness of the mixture layer formed of the electrode composition, excluding the collecting substrate) is usually 30 $\mu$m to 150 $\mu$m, although it is difficult to uniquely define the thickness because it depends on the composition and production conditions of the composition.

[Nonaqueous Electrolyte Secondary Battery]

The electrode formed of the electrode composition above can be used as an electrode of a nonaqueous electrolyte secondary battery. In other words, the present invention also provides a nonaqueous electrolyte secondary battery having an electrode formed of the electrode composition above. The nonaqueous electrolyte secondary battery may have a structure in which a positive electrode and a negative electrode are alternately stacked with a separator interposed and wound multiple times. The separator is usually impregnated with a nonaqueous electrolyte. As this negative electrode and/or positive electrode, a negative electrode and/or a positive electrode formed of the electrode composition described above can be used. In such a nonaqueous electrolyte secondary battery, carboxymethylcellulose or a salt thereof with high solubility is used, and the process such as filtration by a filter can be eliminated, leading to high productivity. In addition, the initial irreversible capacity is significantly improved, thereby achieving high battery characteristics.

Examples

Although the present invention will be described in more detail below with examples, the present invention is not limited by those examples.

<Evaluation>

The carboxymethylcellulose or the salt thereof, the aqueous carboxymethylcellulose solution, and the electrode composition used in examples and comparative examples were evaluated by the methods below.

<Measurement of the Amount of Acidic Carboxy Groups>

The amount of acidic carboxy groups of carboxymethylcellulose or a salt thereof was measured by the method below.

An aqueous solution was prepared by adding 100 mL of ion-exchange water to 0.1 g of carboxymethylcellulose or a salt thereof, and to this aqueous solution, a 0.1N aqueous sodium hydroxide solution was added dropwise at a rate of 0.5 mL/min while the electrical conductivity was measured. The electrical conductivity was measured by a conductometer ("CM-30S" manufactured by TOA ELECTRONICS, Inc.). During dropwise addition, the liquid temperature was kept constant (25°C).

The amount of acidic carboxy groups was calculated by Equation (A) above from the amount a (mL) of an aqueous sodium hydroxide solution consumed in weak acidity in which the change of electrical conductivity is mild, that is, in the neutralization process of acidic carboxy groups.

Specifically, the amount of acidic carboxy groups was calculated by the method below.

A titration curve was created by plotting the electrical conductivity against the amount of the added aqueous sodium hydroxide solution.

Subsequently, in the titration curve, a first asymptote was created by the least squares method from the points in a range in which the change of electrical conductivity is mild, and a second asymptote was created by the least squares method from the points in a range in which the change of electrical conductivity is steep. The amount of the added aqueous sodium hydroxide solution at the intersection of the first asymptote and the second asymptote was considered to be the amount a (mL) of an aqueous sodium hydroxide solution consumed in the neutralization process of acidic carboxy groups.

The amount of acidic carboxy groups was calculated by Equation (A) above from the mass (g) of carboxymethylcellulose or a salt thereof, the concentration (N) of sodium hydroxide, and the amount a (mL) of an aqueous sodium hydroxide solution, used in titration.

<pH Measurement>

The pH (hydrogen ion exponent) of a sample was measured using a glass electrode pH meter ("HM-30P" manufactured by DKK-TOA CORPORATION) at a measurement temperature of 25°C.

<Method of Measuring Degree of Substitution with Carboxymethyl (CM-DS)>

About 2.0 g of a sample of the pulverized product of carboxymethylcellulose accurately weighted was put into a 300-mL Erlenmeyer flask with a stopper, into which 100 mL of nitric acid-methanol (a solution obtained by adding 100 mL of special-grade concentrated nitric acid to 1,000 mL of methanol) was added and a resultant mixture was stirred for 3 hours to convert carboxymethylcellulose salt (CMC salt) into H-CMC (carboxymethylcellulose). The absolute dry H-CMC in the amount of 1.5 g to 2.0 g accurately weighted was put into a 300-mL Erlenmeyer flask with stopper. The H-CMC was wetted by 15 mL of 80% methanol, to which 100 mL of 0.1N NaOH was added and a resultant mixture was stirred at room temperature for 3 hours. Using phenolphthalein as an indicator, the excessive NaOH was back-titrated with 0.1N $H_2SO_4$. The CM-DS was calculated by Equation 1 below.

$$
\text{(Equation 1)}
$$

$$
A = [(100 \times F - (0.1N\ H_2SO_4\ (mL)) \times F') \times 0.1]/ \text{(the absolute dry weight (g) of H-CMC)}
$$

$$
\text{Degree of substitution with carboxymethyl (CM-DS)} = 0.162 \times A/(1 - 0.058 \times A)
$$

A: the amount of 1N NaOH (mL) required to neutralize 1 g of H-CMC
F': factor of 0.1N $H_2SO_4$

F: factor of 0.1N NaOH

<Maximum Particle Size and Average Particle Size>

Using methanol as a dispersant, the volume cumulative 100% particle size and the volume cumulative 50% particle size of the sample were measured by a laser diffraction-scattering particle size distribution meter ("Mastersizer 2000E" manufactured by Malvern Panalytical Ltd.) and assumed as the maximum particle size and the average particle size, respectively, of the sample.

<Absorption Ratio of Carboxymethylcellulose (CMC)>

The electrode composition was vacuum-filtered under a reduced pressure of -200 mmHg using a filter (product name: Separoto manufactured by Kiriyama Glass Works Co.) through filter paper (pore size 25 $\mu$m). The residue left on the filter was washed with 200 mL of water to remove carboxymethylcellulose not adsorbed to the residue. Subsequently, the washed residue was dried at 105°C for a whole day and night to remove moisture.
The dried residue was analyzed using a thermogravimetric analyzer (product name: TGA-50H manufactured by Shimadzu Corporation), where the residue weight at 200°C is $W_A$ (g) and the residue weight at 350°C is $W_B$(g). The adsorption ratio of carboxymethylcellulose to the electrode active material was determined by Equation 2 below.

$$\text{(Equation 2)}$$

$$\text{Adsorption ratio of carboxymethylcellulose (\%)} = ((\text{the}$$
$$\text{residue weight } W_A \text{ (g)} - \text{the residue weight } W_B \text{ (g)})/\text{the}$$
$$\text{remaining ratio X of unburned CMC at } 350°C)/\text{the total}$$
$$\text{amount (g) of CMC in the electrode composition} \times 100$$

(where the remaining ratio X of unburned CMC at 350°C = 0.5)
Since the thermogravimetric change up to 350°C is mainly caused by the weight change of carboxymethylcellulose, the thermogravimetric change of other components can be ignored.

<Production Example 1>

After 100 g of carboxymethylcellulose (the viscosity by a Brookfield viscometer at 25°C of a 1 mass% aqueous solution: 3,500 mPa·s, the degree of substitution with carboxymethyl: 0.87, "SUNROSE" manufactured by NIPPON PAPER INDUSTRIES CO., LTD.) was immersed and dispersed in methanol mixed with water (water content 75 mass%), the dispersion liquid was adjusted to a pH of 6.0 by adding 80% acetic acid. Subsequently, the dispersion liquid was vacuum-filtered at a reduced pressure of -200 mmHg using a filter (product name: Separoto manufactured by Kiriyama Glass Works Co.) through filter paper (pore size 25 $\mu$m) to obtain a solid (residue). The residue was dried to obtain carboxymethylcellulose or a salt thereof (1). The amount of acidic carboxy groups of the resultant carboxymethylcellulose or a salt thereof (1) was measured by the method above. The result is listed in Table 1. The amount of acidic carboxy groups of the carboxymethylcellulose or the salt thereof (1) was 2.09 mmol/g. The viscosity at 25°C by a Brookfield viscometer of a 1 mass% aqueous solution of the carboxymethylcellulose or the salt thereof (1) was 3,200 mPa·s.

[Table 1]

| Table 1 : pH=6.0 | |
|---|---|
| NaOH(mL) | Electrical conductivity($\mu$S/cm) |
| 0 | 117.5 |
| 0.5 | 119.5 |
| 1 | 121.8 |
| 1.5 | 124.4 |
| 2 | 127.2 |
| 2.5 | 168.9 |

(continued)

| Table 1 : pH=6.0 | |
| --- | --- |
| NaOH(mL) | Electrical conductivity(μS/cm) |
| 3 | 223 |
| 3.5 | 273 |
| 4 | 325 |
| 4.5 | 376 |
| Amount of acidic carboxy groups | 2.088mmol/g |

<Production Example 2>

Carboxymethylcellulose or a salt thereof (2) was obtained in the same manner as in Production Example 1 except that the dispersion liquid was adjusted to a pH of 6.5 by adding 80% acetic acid. The amount of acidic carboxy groups of the resultant carboxymethylcellulose or a salt thereof (2) was measured by the method above. The result is listed in Table 2. The amount of acidic carboxy groups of the carboxymethylcellulose or the salt thereof (2) was 1.23 mmol/g. The viscosity at 25°C by a Brookfield viscometer of a 1 mass% aqueous solution of the carboxymethylcellulose or the salt thereof (2) was 3,400 mPa·s.

[Table 2]

| Table 2:pH=6.5 | |
| --- | --- |
| NaOH(mL) | Electrical conductivity(μS/cm) |
| 0 | 168.4 |
| 0.5 | 173.5 |
| 1 | 178.1 |
| 1.5 | 211 |
| 2 | 247 |
| 2.5 | 285 |
| 3 | 333 |
| 3.5 | 391 |
| Amount of acidic carboxy groups | 1.234mmol/g |

<Production Example 3>

Carboxymethylcellulose or a salt thereof (3) was obtained in the same manner as in Production Example 1 except that the dispersion liquid was adjusted to a pH of 5.0 by adding 80% acetic acid. The amount of acidic carboxy groups of the resultant carboxymethylcellulose or a salt thereof (3) was measured by the method above. The result is listed in Table 3. The amount of acidic carboxy groups of the carboxymethylcellulose or the salt thereof (3) was 2.41 mmol/g. The viscosity at 25°C by a Brookfield viscometer of a 1 mass% aqueous solution of the carboxymethylcellulose or the salt thereof (3) was 2,900 mPa·s.

[Table 3]

| Table 3:pH=5.0 | |
| --- | --- |
| NaOH(mL) | Electrical conductivity(μS/cm) |
| 0 | 300 |
| 0.5 | 326 |
| 1 | 348 |

(continued)

| Table 3:pH=5.0 | |
|---|---|
| NaOH(mL) | Electrical conductivity($\mu$S/cm) |
| 1.5 | 367 |
| 2 | 385 |
| 2.5 | 462 |
| 3 | 557 |
| 3.5 | 662 |
| 4 | 770 |
| Amount of acidic carboxy groups | 2.413mmol/g |

<Production Example 4>

Carboxymethylcellulose or a salt thereof (4) was obtained in the same manner as in Production Example 1 except that the dispersion liquid was adjusted to a pH of 4.0 by adding 80% acetic acid. The amount of acidic carboxy groups of the resultant carboxymethylcellulose or a salt thereof (4) was measured by the method above. The result is listed in Table 4. The amount of acidic carboxy groups of the carboxymethylcellulose or the salt thereof (4) was 13.74 mmol/g. The viscosity at 25°C by a Brookfield viscometer of a 1 mass% aqueous solution of the carboxymethylcellulose or the salt thereof (4) was 2,400 mPa·s.

[Table 4]

| Table 4 : pH=4.0 | |
|---|---|
| NaOH(mL) | Electrical conductivity($\mu$S/cm) |
| 0 | 345 |
| 0.5 | 372 |
| 1 | 401 |
| 1.5 | 433 |
| 2 | 463 |
| 2.5 | 496 |
| 3 | 532 |
| 3.5 | 561 |
| 4 | 591 |
| 4.5 | 623 |
| 5 | 654 |
| 5.5 | 682 |
| 6 | 713 |
| 6.5 | 740 |
| 7 | 771 |
| 7.5 | 801 |
| 8 | 829 |
| 8.5 | 855 |
| 9 | 885 |
| 9.5 | 912 |

(continued)

| Table 4 : pH=4.0 | |
|---|---|
| NaOH(mL) | Electrical conductivity($\mu$S/cm) |
| 10 | 938 |
| 10.5 | 963 |
| 11 | 991 |
| 11.5 | 1016 |
| 12 | 1041 |
| 12.5 | 1065 |
| 13 | 1087 |
| 13.5 | 1126 |
| 14 | 1200 |
| 14.5 | 1285 |
| 15 | 1377 |
| 15.5 | 1468 |
| 16 | 1562 |
| Amount of acidic carboxy groups | 13.741mmol/g |

<Comparative Production Example 1>

Carboxymethylcellulose or a salt thereof (C1) was obtained in the same manner as in Production Example 1 except that the dispersion liquid was adjusted to a pH of 7.0 by adding 80% acetic acid. The amount of acidic carboxy groups of the resultant carboxymethylcellulose or a salt thereof (C1) was measured by the method above. The result is listed in Table 5. The amount of acidic carboxy groups of the carboxymethylcellulose or the salt thereof (C1) was 1.12 mmol/g.

[Table 5]

| Table 5:pH=7.0 | |
|---|---|
| NaOH(mL) | Electrical conductivity($\mu$S/cm) |
| 0 | 196.5 |
| 0.5 | 197.2 |
| 1 | 198.9 |
| 1.5 | 203 |
| 2 | 214 |
| 2.5 | 225 |
| 3 | 239 |
| Amount of acidic carboxy groups | 1.124mmol/g |

<Production Example 5>

Commercially available carboxymethylcellulose (the viscosity at 25°C by a Brookfield viscometer of a 1 mass% aqueous solution: 3,500 mPa·s, the degree of substitution with carboxymethyl: 0.87, trade name "SUNROSE" manufactured by NIPPON PAPER Chemicals CO., LTD.) was subjected to a dry pulverization process using a jet mill and classified by a cyclone classifier, resulting in a pulverized product of carboxymethylcellulose with an average particle size of 8 $\mu$m and a maximum particle size of 31 $\mu$m.

After 5 g of the pulverized product was immersed in 95 g of methanol, acetic acid was added until methanol attains a pH of 6.2. Subsequently, the mixture was vacuum-filtered under a reduced pressure of -200 mmHg using a filter (product name: Separoto manufactured by Kiriyama Glass Works Co.) through filter paper (pore size 25 $\mu$m) to obtain a solid (residue). The residue was dried to obtain pH-adjusted carboxymethylcellulose or a salt thereof (5). The amount of acidic carboxy groups of the resultant carboxymethylcellulose or a salt thereof (5) was measured by the method above. The result is listed in Table 6. The amount of acidic carboxy groups of the carboxymethylcellulose or the salt thereof (5) was 1.523 mmol/g. The viscosity at 25°C by a Brookfield viscometer of a 1 mass% aqueous solution of the carboxymethylcellulose or the salt thereof (5) was 2,000 mPa·s.

[Table 6]

| Table 6:pH=6.2 | |
|---|---|
| NaOH(mL) | Electrical conductivity($\mu$S/cm) |
| 0 | 150.1 |
| 0.5 | 154.5 |
| 1 | 159.2 |
| 1.5 | 163.3 |
| 2 | 202 |
| 2.5 | 255 |
| 3 | 299 |
| 3.5 | 341 |
| 4 | 383 |
| Amount of acidic carboxy groups | 1.523mmol/g |

<Example 1-1>

(Production of Pulverized Product of Carboxymethylcellulose)

Commercially available carboxymethylcellulose (the viscosity by a Brookfield viscometer at 25°C of a 1 mass% aqueous solution: 3,500 mPa·s, the degree of substitution with carboxymethyl: 0.87, trade name "SUNROSE" manufactured by NIPPON PAPER Chemicals CO., LTD.) was subjected to a dry pulverization process using a jet mill and then classified by a cyclone classifier to obtain a pulverized product of carboxymethylcellulose with an average particle size of 8 $\mu$m and a maximum particle size of 31 $\mu$m.

(Production of pH-adjusted Carboxymethylcellulose)

After 5 g of the pulverized product was immersed in 95 g of methanol, acetic acid was added until methanol attained a pH of 6.2. Subsequently, the mixture was vacuum-filtered under a reduced pressure of -200 mmHg using a filter (product name: Separoto manufactured by Kiriyama Glass Works Co.) through filter paper (pore size 25 $\mu$m). The residue was dried to obtain pH-adjusted carboxymethylcellulose (1-1).

(Production of Aqueous Carboxymethylcellulose Solution)

Each of 97 parts by mass of graphite powder, 1.5 parts by mass in terms of SBR of a styrene-butadiene rubber (SBR) dispersion (styrene-butadiene latex) as a binder, and 1.5 parts by mass of carboxymethylcellulose (1-1) was weighted. Then, the carboxymethylcellulose (1-1) was dissolved by adding distilled water and a resultant mixture was stirred to yield a 1 mass% aqueous solution. An aqueous carboxymethylcellulose solution (1-1) (pH 5.7) was thus obtained.

(Production of Electrode Composition)

Subsequently, the graphite powder weighted in advance was added as an electrode active material to the aqueous carboxymethylcellulose solution (1-1), and a resultant mixture was stirred and mixed by a homomixer (product name: T.K. AUTO HOMO MIXER manufactured by Tokushu Kika Kogyo Co., Ltd.) at 5,000 rpm for 30 minutes. Thereafter, 4 parts by weight in terms of SBR of a styrene-butadiene rubber (SBR) dispersion was added as a binder and further stirred under the same conditions for two minutes to produce an electrode composition (1-1) in the form of a slurry. Using the electrode composition (1-1), the adsorption ratio of carboxymethylcellulose to the electrode active material was obtained by the method above. The result is listed in Table 7.

<Example 1-2>

A methanol dispersion liquid including the pulverized product of the carboxymethylcellulose of Example 1-1 was adjusted to a pH of 4.7 by adding acetic acid and filtered by the same method as in Example 1-1 to obtain pH-adjusted carboxymethylcellulose (1-2).

An electrode composition (1-2) in the form of a slurry was obtained in the same manner as in Example 1-1 except that instead of the aqueous carboxymethylcellulose solution (1-1), an aqueous carboxymethylcellulose solution (1-2) (pH 4.1) was used in which the carboxymethylcellulose (1-2) was dissolved by adding distilled water and a resultant mixture was stirred to produce a 1 mass% aqueous solution. The adsorption ratio of carboxymethylcellulose to the electrode active material was determined. The result is listed in Table 7.

<Example 1-3>

A methanol dispersion liquid including the pulverized product of the carboxymethylcellulose of Example 1-1 was adjusted to a pH of 6.8 by adding acetic acid and filtered by the same method to obtain pH-adjusted carboxymethylcellulose (1-3).

An electrode composition (1-3) in the form of a slurry was obtained in the same manner as in (Production of Electrode Composition) in Example 1-1 except that instead of the aqueous carboxymethylcellulose solution (1-1), an aqueous carboxymethylcellulose solution (1-3) (pH 6.4) was used in which the carboxymethylcellulose (1-3) was dissolved by adding distilled water and a resultant mixture was stirred to produce a 1 mass% aqueous solution. The adsorption ratio of carboxymethylcellulose to the electrode active material was determined. The result is listed in Table 7.

<Comparative Example 1-1>

Commercially available carboxymethylcellulose (the viscosity by a Brookfield viscometer at 25°C of a 1 mass% aqueous solution: 3,500 mPa·s, the degree of substitution with carboxymethyl: 0.87, trade name "SUNROSE" manufactured by NIPPON PAPER Chemicals CO., LTD.) was subjected to a dry pulverization process using a jet mill and then classified by a cyclone classifier to obtain carboxymethylcellulose (1-4) which is a pulverized product of carboxymethylcellulose with an average particle size of 8 μm and a maximum particle size of 31 μm.

Then, an electrode composition (1-4) in the form of a slurry was obtained in the same manner as in Example (1-1) except that instead of the aqueous carboxymethylcellulose solution (1-1), an aqueous carboxymethylcellulose solution (1-4) (pH 7.0) was used in which the carboxymethylcellulose (1-4) was dissolved by adding distilled water and a resultant mixture was stirred to produce a 1 mass% aqueous solution. The adsorption ratio of carboxymethylcellulose to the electrode active material was determined. The result is listed in Table 7.

[Table 7]

Table 7

|  | Example 1-1 | Example 1-2 | Example 1-3 | Comparative Example 1-1 |
|---|---|---|---|---|
| pH adjustment of CMC in methanol | 6.2 | 4.7 | 6.8 | - |
| Aqueous CMC solution Type | 1-1 | 1-2 | 1-3 | 1-4 |
| pH | 5.7 | 4.1 | 6.4 | 7.0 |
| Electrode composition | 1-1 | 1-2 | 1-3 | 1-4 |
| CMC adsorption ratio(%) | 18.6 | 13.4 | 14.8 | 9.9 |

<Example 2-1>

(Production of Pulverized Product of Carboxymethylcellulose)

Commercially available carboxymethylcellulose (the viscosity by a Brookfield viscometer at 25°C of a 1 mass% aqueous solution: 3,500 mPa·s, the degree of substitution with carboxymethyl: 0.87, trade name "SUNROSE" manufactured by NIPPON PAPER INDUSTRIES CO., LTD.) was subjected to a dry pulverization process using a jet mill and then classified by a cyclone classifier to obtain a pulverized product of carboxymethylcellulose with an average particle size of 8 μm and a maximum particle size of 31 μm.

(Production of Aqueous Carboxymethylcellulose Solution)

Subsequently, the pulverized product was dissolved in water to produce an aqueous solution, to which acetic acid was further added to obtain an aqueous carboxymethylcellulose solution (2-1) (pH 5.8, concentration 1 mass%).

(Production of Electrode Composition)

As an electrode active material 92 parts by weight of graphite powder was added to 400 parts by weight (4 parts by weight in terms of carboxymethylcellulose and a salt thereof) to the 1 mass% aqueous carboxymethylcellulose solution (2-1) and a resultant mixture was stirred by a homomixer (product name: T.K. AUTO HOMO MIXER manufactured by Tokushu Kika Kogyo Co., Ltd.) at 5,000 rpm for 30 minutes. Thereafter, 4 parts by weight in terms of SBR of a styrene-butadiene rubber (SBR) dispersion (styrene-butadiene latex) was added as a binder and further stirred under the same conditions for two minutes to produce an electrode composition (2-1) in the form of a slurry. Using the electrode composition (2-1), the adsorption ratio of carboxymethylcellulose to the electrode active material was determined by the method above. The result is listed in Table 8.

<Example 2-2>

An electrode composition (2-2) in the form of a slurry was obtained in the same manner as in Example 2-1 except that an aqueous carboxymethylcellulose solution (2-2) (pH 4.2, concentration 1 mass%) was adjusted by adding acetic acid in the production of the aqueous carboxymethylcellulose solution in Example 2-1, and the adsorption ratio of carboxymethylcellulose to the electrode active material was determined. The result is listed in Table 8.

<Example 2-3>

An electrode composition (2-3) in the form of a slurry was obtained in the same manner as in Example 2-1 except that an aqueous carboxymethylcellulose solution (2-3) (pH 6.5, concentration 1 mass%) was adjusted by adding acetic acid in the production of the aqueous carboxymethylcellulose solution in Example 2-1, and the adsorption ratio of carboxymethylcellulose to the electrode active material was determined. The result is listed in Table 8.

<Comparative Example 2-1>

An electrode composition (2-4) in the form of a slurry was obtained in the same manner as in Example 2-1 except that an aqueous carboxymethylcellulose solution (2-4) (pH 7.1, concentration 1 mass%) was used without adding acetic acid in the production of the aqueous carboxymethylcellulose solution in Example 2-1, and the adsorption ratio of carboxymethylcellulose to the electrode active material was determined. The result is listed in Table 8.

[Table 8]

Table 8

| | Example 2-1 | Example 2-2 | Example 2-3 | Comparative Example 2-1 |
|---|---|---|---|---|
| Aqueous CMC solution Type | 2-1 | 2-2 | 2-3 | 2-4 |
| pH | 5.8 | 4.2 | 6.5 | 7.1 |
| Electrode composition | 2-1 | 2-2 | 2-3 | 2-4 |

(continued)

|  | Example 2-1 | Example 2-2 | Example 2-3 | Comparative Example 2-1 |
|---|---|---|---|---|
| CMC adsorption ratio(%) | 18.5 | 13.5 | 14.5 | 9.9 |

<Example 3-1> (Production of Pulverized Product of Carboxymethylcellulose)

Commercially available carboxymethylcellulose (the viscosity by a Brookfield viscometer at 25°C of a 1 mass% aqueous solution: 3,500 mPa·s, the degree of substitution with carboxymethyl: 0.87, trade name "SUNROSE" manufactured by NIPPON PAPER Chemicals CO., LTD.) was subjected to a dry pulverization process using a jet mill and then classified by a cyclone classifier to obtain a pulverized product of carboxymethylcellulose with an average particle size of 8 $\mu$m and a maximum particle size of 31 $\mu$m.

(Production of Electrode Composition)

As an electrode active material 97 parts by mass of graphite powder, 1.5 parts by mass in terms of SBR of a styrene-butadiene rubber (SBR) dispersion (styrene-butadiene latex) as a binder, and 1.5 parts by mass of the pulverized product of carboxymethylcellulose were weighted. Then, the pulverized product of carboxymethylcellulose was dissolved by adding distilled water and a resultant mixture was stirred to produce a 1 mass% aqueous solution. An aqueous carboxymethylcellulose solution (pH 7.0) was thus obtained.
Subsequently, the graphite powder weighted in advance was added to the aqueous carboxymethylcellulose solution, and a resultant mixture was stirred and mixed by a homomixer (product name: T.K. AUTO HOMO MIXER manufactured by Tokushu Kika Kogyo Co., Ltd.) at 5,000 rpm for 30 minutes. Thereafter, 4 parts by weight in terms of SBR of a styrene-butadiene rubber (SBR) dispersion was added as a binder and a resultant mixture was stirred under the same conditions for two minutes to obtain an electrode composition (3-0) (pH 7.2) in the form of a slurry.

(pH Adjustment of Electrode Composition)

Subsequently, a pH-adjusted electrode composition (3-1) (pH 5.9) was produced by adding acetic acid to the electrode composition (3-0) to adjust the pH to 5.9. Using the electrode composition (3-1), the adsorption ratio of carboxymethylcellulose to the electrode active material was determined by the method above. The result is listed in Table 9.

<Example 3-2>

An electrode composition (3-2) (pH 4.5) was obtained in the same manner as in Example 3-1 except that acetic acid was added to the electrode composition (3-0) to adjust the pH to 4.5, and the adsorption ratio of carboxymethylcellulose to the electrode active material was determined. The result is listed in Table 9.

<Example 3-3>

An electrode composition (3-3) (pH 6.4) was obtained in the same manner as in Example 3-1 except that acetic acid was added to the electrode composition (3-0) to adjust the pH to 6.4, and the adsorption ratio of carboxymethylcellulose to the electrode active material was determined. The result is listed in Table 9.

<Comparative Example 3-1>

The electrode composition (3-0) (pH 7.2) obtained in Example 3-1 was used as it is without adjusting the pH with acetic acid, and the adsorption ratio of carboxymethylcellulose to the electrode active material was determined. The result is listed in Table 9.

[Table 9]

Table 9

|  | Example 3-1 | Example 3-2 | Example 3-3 | Comparative Example 3-1 |
|---|---|---|---|---|
| Aqueous CMC solution Type | 3-1 | 3-2 | 3-3 | 3-0 |
| pH | 5.9 | 4.5 | 6.4 | 7.2 |
| CMC adsorption ratio(%) | 18.4 | 13.7 | 14.8 | 9.7 |

**Claims**

1. A carboxymethylcellulose or a salt thereof, wherein a pH at 25°C of an aqueous solution having a solid content concentration of 1 mass% is 4.0 or higher to lower than 6.8.

2. The carboxymethylcellulose or the salt thereof according to claim 1, wherein a degree of substitution with carboxymethyl per anhydrous glucose unit is 0.45 or higher.

3. The carboxymethylcellulose or the salt thereof according to claim 1 or 2, wherein a viscosity of an aqueous solution having a solid content concentration of 1 mass% measured by a Brookfield viscometer at 25°C is 1,000 mPa·s or higher to 20,000 mPa·s or lower.

4. The carboxymethylcellulose or the salt thereof according to any one of claims 1 to 3, wherein an amount of acidic carboxy groups is 1.15 mmol/g or larger to 20.00 mmol/g or smaller.

5. An aqueous carboxymethylcellulose solution comprising the carboxymethylcellulose or the salt thereof according to any one of claims 1 to 4 and water.

6. The aqueous carboxymethylcellulose solution according to claim 5, wherein a pH at 25°C is 4.0 or higher to lower than 6.8.

7. An electrode composition for a nonaqueous electrolyte secondary battery, comprising the carboxymethylcellulose or the salt thereof according to any one of claims 1 to 4, or the aqueous carboxymethylcellulose solution according to claim 5 or 6.

8. The electrode composition for a nonaqueous electrolyte secondary battery according to claim 7, wherein a pH at 25°C is 4.0 or higher to lower than 6.8.

9. The electrode composition for a nonaqueous electrolyte secondary battery according to claim 7 or 8, further comprising water and an electrode active material.

10. The electrode composition for a nonaqueous electrolyte secondary battery according to claim 9, wherein the electrode active material is graphite.

11. The electrode composition for a nonaqueous electrolyte secondary battery according to any one of claims 7 to 10, further comprising a synthetic rubber-based binder.

12. An electrode for a nonaqueous electrolyte secondary battery, wherein the electrode is formed of the electrode composition for a nonaqueous electrolyte secondary battery according to any one of claims 7 to 11.

13. A nonaqueous electrolyte secondary battery comprising the electrode according to claim 12.

14. An aqueous carboxymethylcellulose solution for use in an electrode composition for a nonaqueous electrolyte secondary battery, wherein a pH at 25°C is 4.0 or higher to lower than 6.8.

15. The aqueous carboxymethylcellulose solution according to claim 14, wherein
the aqueous carboxymethylcellulose solution comprises carboxymethylcellulose or a salt thereof with a degree of substitution with carboxymethyl per anhydrous glucose unit of 0.45 or higher, and a viscosity of a an aqueous solution having a solid content concentration of 1 mass% measured by a Brookfield viscometer at 25°C is 1,000 mPa·s or higher to 20,000 mPa·s or lower.

16. An electrode composition for a nonaqueous electrolyte secondary battery, comprising the aqueous carboxymethylcellulose solution according to claim 14 or 15.

17. An electrode for a nonaqueous electrolyte secondary battery, wherein the electrode is formed of the electrode composition for a nonaqueous electrolyte secondary battery according to claim 16.

18. A nonaqueous electrolyte secondary battery comprising the electrode according to claim 17.

19. An electrode composition for a nonaqueous electrolyte secondary battery comprising a carboxymethylcellulose or a salt thereof, an electrode active material, and water, wherein a pH at 25°C is 4.0 or higher to lower than 6.8.

20. The electrode composition for a nonaqueous electrolyte secondary battery according to claim 19, wherein the carboxymethylcellulose or the salt thereof has a degree of substitution with carboxymethyl per anhydrous glucose unit of 0.45 or higher, and a viscosity of an aqueous solution of the carboxymethylcellulose or the salt thereof having a solid content concentration of 1 mass% measured by a Brookfield viscometer at 25°C is 1,000 mPa·s or higher to 20,000 mPa·s or lower.

21. The electrode composition for a nonaqueous electrolyte secondary battery according to claim 19 or 20, wherein the electrode active material is graphite.

22. The electrode composition for a nonaqueous electrolyte secondary battery according to any one of claims 19 to 21, further comprising a synthetic rubber-based binder.

23. An electrode for a nonaqueous electrolyte secondary battery, wherein the electrode is formed of the electrode composition for a nonaqueous electrolyte secondary battery according to any one of claims 19 to 22.

24. A nonaqueous electrolyte secondary battery comprising the electrode according to claim 23.

25. A method of producing a carboxymethylcellulose or a salt thereof, the method comprising:

(i): dispersing a raw material including a carboxymethylcellulose or a salt thereof in a dispersion medium to obtain a dispersion liquid;
(ii): adjusting a pH at 25°C of the resultant dispersion liquid to 4.0 or higher to 6.8 or lower; and
(iii): separating a solid from the pH-adjusted dispersion liquid,

wherein an amount of acidic carboxy groups is 1.15 mmol/g or larger to 20.00 mmol/g or smaller.

## INTERNATIONAL SEARCH REPORT

| International application No. |
| --- |
| PCT/JP2017/034906 |

**A. CLASSIFICATION OF SUBJECT MATTER**
*C08B11/12*(2006.01)i, *H01M4/62*(2006.01)i

According to International Patent Classification (IPC) or to both national classification and IPC

**B. FIELDS SEARCHED**

Minimum documentation searched (classification system followed by classification symbols)
C08B11/12, H01M4/62

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 61-243801 A (Dai-Ichi Kogyo Seiyaku Co., Ltd.), 30 October 1986 (30.10.1986), particularly, pages 5 to 8 (Family: none) | 1-6 |
| X | JP 2008-50386 A (Dai-Ichi Kogyo Seiyaku Co., Ltd.), 06 March 2008 (06.03.2008), particularly, claim 1; paragraph [0014]; examples 1, 2 (Family: none) | 1-6,25 |

☒ Further documents are listed in the continuation of Box C. ☐ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| 01 November 2017 (01.11.17) | 14 November 2017 (14.11.17) |

| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |
| --- | --- |

Form PCT/ISA/210 (second sheet) (January 2015)

**INTERNATIONAL SEARCH REPORT**

International application No.

PCT/JP2017/034906

C (Continuation). DOCUMENTS CONSIDERED TO BE RELEVANT

| Category* | Citation of document, with indication, where appropriate, of the relevant passages | Relevant to claim No. |
|---|---|---|
| X | JP 2005-100773 A (Toshiba Corp.), 14 April 2005 (14.04.2005), particularly, claim 1; paragraphs [0020], [0021] (Family: none) | 1-24 |
| X | JP 2009-64564 A (Sanyo Electric Co., Ltd.), 26 March 2009 (26.03.2009), particularly, claim 1; paragraphs [0022], [0023]; paragraph [0065], table 1 & US 2009/0317718 A1 claim 1; paragraphs [0031], [0032]; page 5, table 1 | 19-24 |
| A | JP 2011-90935 A (Daicel Chemical Industries, Ltd.), 06 May 2011 (06.05.2011), a whole article (Family: none) | 1-25 |
| A | JP 2014-535136 A (LG Chem, Ltd.), 25 December 2014 (25.12.2014), a whole article & US 2015/0017529 A1 & WO 2013/094942 A1 & EP 2760068 A1 & KR 10-2013-0079166 A & CN 103891016 A | 1-25 |

Form PCT/ISA/210 (continuation of second sheet) (January 2015)

**EP 3 521 318 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H574461 B

- JP 2003157847 A